**Europäisches Patentamt**

**European Patent Office**

**Office européen des brevets**

(19)

(11) Veröffentlichungsnummer : **0 035 109**
**B1**

(12) **EUROPÄISCHE PATENTSCHRIFT**

(45) Veröffentlichungstag der Patentschrift :
**22.06.83**

(51) Int. Cl.³ : **C 21 C 5/50**, F 16 H 57/00

(21) Anmeldenummer : **81100453.0**

(22) Anmeldetag : **22.01.81**

(54) **Drehmomentabstützung für auf Wellenzapfen reitende Antriebe, insbesondere für Konverterkippantriebe.**

(30) Priorität : **01.03.80 DE 3007916**

(43) Veröffentlichungstag der Anmeldung :
**09.09.81 Patentblatt 81/36**

(45) Bekanntmachung des Hinweises auf die Patenterteilung : **22.06.83 Patentblatt 83/25**

(84) Benannte Vertragsstaaten :
**AT BE FR GB LU**

(56) Entgegenhaltungen :
**DE A 1 650 848**
**DE A 2 531 027**
**DE B 1 171 690**
**DE C 887 443**
**US A 2 844 048**

(73) Patentinhaber : **Mannesmann AG**
**Mannesmannufer 2**
**D-4000 Düsseldorf 1 (DE)**

(72) Erfinder : **Ackermann, Wilhelm**
**Grieperstrasse 49**
**D-4300 Essen 1 (DE)**

## Drehmomentabstützung für auf Wellenzapfen reitende Antriebe, insbesondere für Konverterkippantriebe

Die Erfindung betrifft eine Drehmomentabstützung für auf Wellenzapfen reitende Antriebe, insbesondere für Konverterkippantriebe, auf deren anzutreibendem Wellenzapfen das Getriebegehäuse gelagert ist, wobei jeweils an einem Untersetzungsgetriebe, das in das auf dem Wellenzapfen drehfest angeordnete Großzahnrad mit einem Ritzel eingreift, ein Antriebsmotor angeflanscht ist, bestehend aus symmetrisch zur Drehachse des anzutreibenden Wellenzapfens am Getriebegehäuse mittels Gelenklagern befestigten Lenkerstangen, deren untere Enden jeweils mit parallelverlaufenden, mit auf Flurhöhe ortsfest angeordneten Gelenklagern in Verbindung stehenden Hebeln gelenkig verbunden sind, und mit mindestens einer die Parallelhebel unter sich verbindenden Zug-Druck-Stange.

Derartige reitende Antriebe werden auch fliegende Antriebe genannt, weil das Antriebsgehäuse sich nicht auf ein ortsfestes Podest, sondern auf den Wellenzapfen stützt, der somit das volle Gewicht des Antriebs trägt. Die Anordnung des Antriebs auf dem Wellenzapfen erspart eine Kupplung zwischen Wellenzapfen und einem auf einem besonderen Podest angeordneten Antrieb. Außerdem führt der auf dem Wellenzapfen reitende Antrieb alle Verlagerungen des Wellenzapfens zusammen mit dem Wellenzapfen aus. Solche Verlagerungen können aus Durchbiegungen des Wellenzapfens bestehen, verursacht durch die Reaktions-Stützkraft des Wellenlagers oder aus Wärmedehnungen des Körpers, an dem der Wellenzapfen befestigt ist oder auch aus Überlagerungen beider Beanspruchungsarten. Ferner berücksichtigen derartige auf Wellenzapfen reitende Antriebe Herstellungsungenauigkeiten der Welle, der Wellenlager sowie Maßabweichungen des Fundamentes. Je größer die anzutreibenden Körper sind, desto mehr wächst sich auch das Lagerspiel, das ebenfalls zu den sich einstellenden Lageänderungen des Wellenzapfens während einer Umdrehung des Wellenzapfens beiträgt. Alle Verlagerungen des Wellenzapfens führt der Antrieb ebenfalls aus, so daß der Eingriff der angetriebenen Ritzel in das Großzahnrad in allen Lagen des Wellenzapfens gewährleistet ist.

Die Drehmomentabstützung solcher reitender Antriebe bildet das gegen Drehung an einer ortsfesten Stelle abgestützte Getriebegehäuse. Bewegungen des Getriebegehäuses werden aufgrund am Getriebegehäuse befestigter Drehmomentstützen zugelassen. Das andere Ende solcher Drehmomentstützen ist in der Regel am Fundament gelagert. Die Lagerung der Enden der Drehmomentstützen kann aus einem mechanisch-kinematisch bewegbaren Gelenk oder auch aus Hebelanordnungen bestehen, die den beiden Drehrichtungen zufolge entgegengesetzte Stützkräfte erzeugen.

Grundsätzlich sind drei Typen von Drehmomentabstützungen bekannt : Die erste besteht aus einer am Getriebegehäuse befestigten, mitschwingenden, hebelförmigen Drehmomentstütze, deren Ende mittels eines räumliche Bewegungen ausführenden Gelenks am Fundament gelagert ist ; der zweite Typ wird durch eine Hebelanordnung gebildet, bei der die Bewegungen des Wellenzapfens bzw. des Getriebegehäuses auf eine senkrecht zur Wellenzapfen-Achse angeordnete Welle in Form einer Torsionsspannung übertragen wird ; der dritte Typ bildet eine Hebelanordnung, bei der die Reaktionskraft in Form einer Zug-Druck-Beanspruchung auf eine ebenfalls senkrecht zur Wellenzapfen-Achse angeordnete Zug-Druck-Stange übertragen wird.

Die vorliegende Erfindung unterliegt der dritten Gattung, d. h. sie bedient sich einer Zug-Druck-Stange.

Eine Drehmomentabstützung der eingangs bezeichneten Gattung ist aus der DE-PS 887 443 bekannt. Die Lenkerstangen sind dort an dem einen Hebelarm von Winkelhebeln befestigt, deren Gelenklager sich auf Flurhöhe befinden. Der andere Hebelarm ragt jedoch in das Fundament und die die Parallelhebel der beiden Winkelhebel verbindende Zug-Druck-Stange verläuft sogar innerhalb des Fundamentes. Diese Lösung erfordert Kanäle im Fundament, wobei Abdeckungen für diese Kanäle für erforderlich erachtet werden müssen, um die Unfallgefahr für das Bedienungspersonal auszuschalten. Außerdem ist die Montage solcher versenkter Einrichtungsteile in den Kanälen umständlicher als auf Flurhöhe.

Der Erfindung liegt die Aufgabe zugrunde, gegenüber dem Bekannten eine Vereinfachung der Drehmomentabstützung zu schaffen, die Drehmomentabstützung insgesamt über dem Flur anzuordnen, damit die Zugänglichkeit, die Montage- bzw. Demontagearbeiten und die Einsichtnahme auf die wichtigsten Teile der Einrichtung zu verbessern.

Diese Aufgabe wird erfindungsgemäß dadurch gelöst, daß die Parallellenker von den ortsfesten Gelenklagern in Normalstellung schräg nach oben verlaufend angeordnet sind, daß die Zug-Druck-Stange in einer Höhenlage zwischen den ortsfesten Gelenklagern und den Getriebegehäuse-Gelenklagern verläuft und daß die Parallellenker aus Laschen bestehen. Hierbei begründet das Merkmal der schräg nach oben verlaufenden Parallellenker einerseits den Wegfall eines der bekannten Winkelhebel-Arme, womit die Vereinfachung erzielt wird und andererseits die Bildung eines wirksamen Hebelarms. Gleichzeitig befinden sich alle Einrichtungsteile der Drehmomentabstützung über der Flurhöhe. Sämtliche Einrichtungsteile sind außerdem leicht zugänglich. Für Montage- bzw. Demontagearbeiten können Flurfahrzeuge ohne besondere Hilfseinrichtungen eingesetzt werden und die Sicht auf die Einrichtungsteile gestattet ohne Schwierigkeiten eine Beobachtung der Einrichtung während des Betriebes.

Um räumliche Bewegungen des Wellenzapfens mit einem unvorhersehbaren Ablauf und Verlauf zu berücksichtigen, wird als Verbesserung der Erfindung vorgeschlagen, daß die Getriebegehäuse-Gelenklager und die Zug-Druck-Stange an der Verbindungsstelle mit den Parallellenkern sowie gegebenenfalls die ortsfesten Gelenklager jeweils mit sphärischen Gelenklagern versehen sind.

Gemäß einer weiteren Ausgestaltung der Erfindung ist vorgesehen, daß die Zug-Druck-Stange in zumindest zwei jeweils mit einer Lücke angeordnete Längenabschnitte aufgeteilt ist, zwischen denen jeweils Dämpfungselemente eingebaut sind. Die Dämpfungselemente werden vorteilhafterweise auf eigentümliche Betriebsmomente des Körpers eingestellt, der mittels eines Wellenzapfenpaares gehalten ist und gekippt werden kann. Bei schweren Körpern, wie z. B. Stahlwerkskonverter-Gefäßen, deren Nutzgewicht bis zu 400 t und mehr betragen kann, sind Reparaturantriebsmomente bzw. Katastrophen- antriebsmomente auf das 2,5 fache des normalen Antriebsmomentes ausgelegt. Dementsprechend fallen die Dämpfungselemente relativ hart aus. Die Lücke zwischen zwei Längenabschnitten dient bei einer solchen Aufteilung der Zug-Druck-Stange zum Auffangen des Weges der Dämpfungselemente.

Eine geschützte Anordnung der Dämpfungselemente kann nach weiteren Merkmalen der Erfindung dann erzielt werden, wenn die Dämpfungselemente in einem Hohlraum eines der Längenabschnitte der Zug-Druck-Stange angeordnet sind.

Die Anordnung der Dämpfungselemente in Hohlräumen der Zug-Druck-Stange kann in kompakter Form erfolgen, indem als Dämpfungselemente zwischen den Längenabschnitten der Zug-Druck-Stange eingespannte, gegebenenfalls vorgespannte Druckfederpakete vorgesehen sind.

Die Aufnahme von Zug- oder Druckkräfte bei getrennten Längenabschnitten der Zug-Druck-Stange und vorgesehenen Dämpfungselementen erfolgt vorteilhafterweise derart, daß die voneinander getrennten Längenabschnitte der Zug-, Druck-Stange mittels eines Schaftbolzens verbunden sind, daß der Schaftbolzen an einem der Längenabschnitte axial festgelegt ist und am benachbarten Längenabschnitt sowohl in Zugkraft-Richtung als auch in Druckkraft-Richtung gegen Stützflächen anliegt.

Die Zuordnung der Dämpfungselemente zu einem Schaftbolzen, der jeweils zwei Längenabschnitte der Zug-Druck-Stange verbindet, ist ferner derart vorgenommen, daß zwischen den Stützflächen an einem Längenabschnitt der Zug-Druck-Stange ein gegen einen Absatz des Schaftbolzens anliegendes Druckfederpaket angeordnet ist, wobei eine Druckplatte und eine Stützfläche durchdringend ein Schraubenteil mit Mutter zum Vorspannen des Druckfederpakets vorgesehen sind.

Schließlich können die Dämpfungselemente vor dem Zutritt von Schmutz und Staub bewahrt werden, indem die Lücke zwischen je zwei Längenabschnitten einer Zug-Druck-Stange mittels eines elastischen Ringbalges verschlossen ist.

Ein Ausführungsbeispiel der Erfindung ist in der Zeichnung dargestellt und wird im folgenden näher beschrieben. Es zeigen

Figur 1 eine Stirnansicht der erfindungsgemäßen Drehmomentabstützung in Richtung des Wellenzapfens,

Figur 2 einen Schnitt entsprechend der Angabe II-II in Figur 1 durch ein sphärisches Gelenklager, in gegenüber Fig. 1 vergrößertem Maßstab,

Figur 3 einen axialen Querschnitt durch die Zug-Druck-Stange mit Dämpfungselementen, in gegenüber Fig. 1 vergrößertem Maßstab.

Die Drehmomentabstützung stellt eine die aktiven Antriebskräfte des Antriebs 1 gegen das Fundament 2 abstützende Einrichtung dar, wobei das Fundament 2 stets gleichgroße Reaktionskräfte entgegensetzt. Das Getriebegehäuse 3 reitet auf dem Wellenzapfen 4. Als Beispiel für die Erläuterung der Erfindung dient ein Stahlwerks-Konverterkippantrieb. Innerhalb des Getriebegehäuses 3 befindet sich das weiter nicht dargestellte Großzahnrad, das drehfest mit dem Wellenzapfen 4 verbunden ist, wohingegen das Getriebegehäuse 3 sich mittels Drehlagern auf Schaftabschnitte des Wellenzapfens 4 aufstützt. In das Großzahnrad greifen Ritzel ein, an die die Motoren 5, 6, 7 und 8 angeschlossen sind. Jeweils ein Ritzel und einer der Motoren 5 bis 8 gehören einem Untersetzungsgetriebe 9, 10, 11 und 12 an.

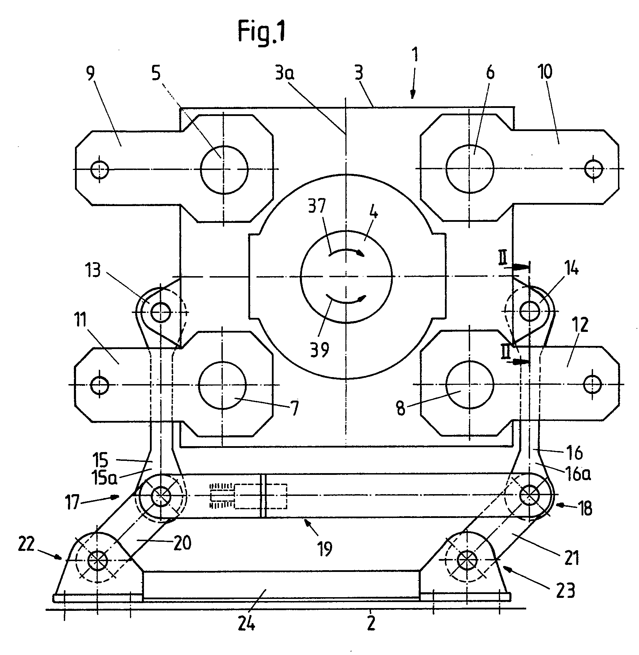

Die erfindungsgemäße Drehmomentabstützung baut nunmehr auf den Getriebegehäuse-Gelenklagern 13 und 14 auf, die am Getriebegehäuse 3 befestigt sind. Von diesen Gelenklagern 13 und 14 verlaufen Lenkerstangen 15 und 16 in der in Fig. 1 gezeichneten Normalstellung parallel zur Mittelachse 3a des Getriebegehäuses 3 und werden in den weiteren Gelenklagern 17 und 18 an ihren unteren Enden 15a bzw. 16a mit der Zug-Druck-Stange 19 und den Parallellenkern 20 und 21 miteinander verbunden. Die Parallellenker 20 und 21 bestehen aus einfachen Laschen und stehen in Normalstellung unter einem Winkel von 45°. Dieser Winkel kann im Bereich von ca. plus 80° bis minus 80° zur Horizontalen gewählt werden, so daß stets ein wirksamer Kraftarm entsteht. Die Parallelenker 20 und 21 sind jeweils für sich in den ortsfesten Gelenklagern 22 und 23 gelagert. Die ortsfesten Gelenklager 22 und 23 stehen über den Rahmen 24 miteinander und mit dem Fundament 2 in fester Verbindung.

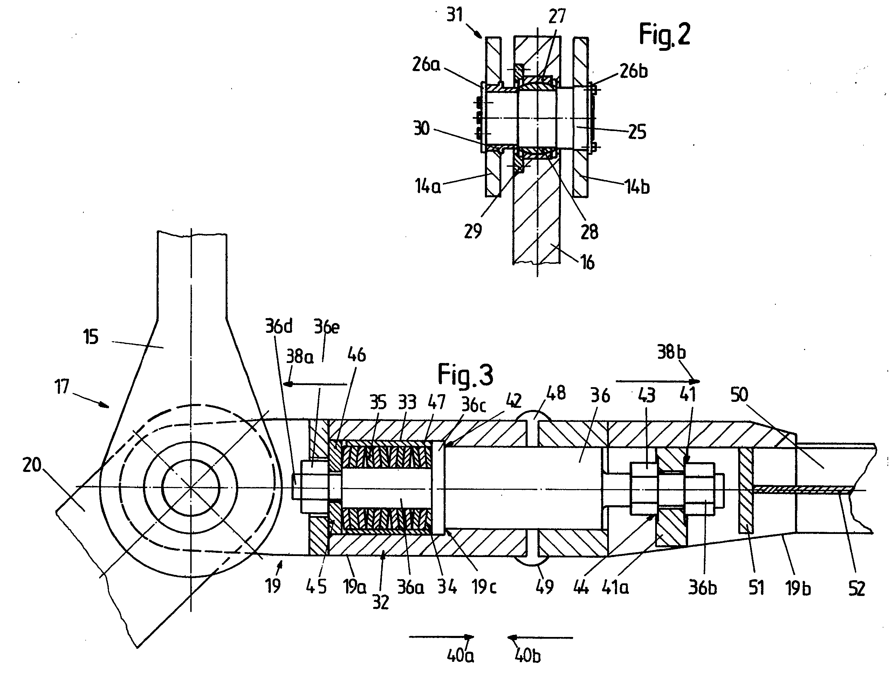

Die Getriebegehäuse-Gelenklager 13 und 14, die Gelenklager 17 und 18 sowie die ortsfesten Gelenklager 22 und 23 entsprechen dem in Fig. 2 dargestellten Aufbau.

Beidseitig der Lenkerstange 16 befinden sich fest angeordnete Lagerwangen 14a und 14b, die zusammen mit den Lagerzapfen 25, Lagerdeckeln 26a, 26b, einer kugeligen Lagerschale 27, einer kugeligen Lagerbüchse 28, einem Lagerdeckel 29 und einer Lagerdistanzbüchse 30 ein sphärisches Gelenklager 31 bilden.

Die Zug-Druck-Stange 19 (Fig. 3) ist in die Längenabschnitte 19a und 19b geteilt. Beide Längenabschnitte stützen sich gegenseitig unter Einschaltung eines Dämpfungselementes 32 ab. Der Längenabschnitt 19a bildet den Hohlraum 33. Die Dämpfungselemente werden im dargestellten Ausführungsbeispiel aus Tellerfedern 34 gebildet, die zu einem Druckfederpaket 35 zusammengefaßt sind. Dabei führt der Schaftbolzen 36 mit dem Schaft 36a das Druckfederpaket 35 und verbindet die Längenabschnitte 19a und 19b der Zug-Druck-Stange 19 miteinander.

Bei Drehrichtung 37 des Antriebs 1 (Fig. 1) entstehen die Zugkräfte 38a und 38b und bei Drehrichtung 39 die Druckkräfte 40a und 40b innerhalb der Zug-Druck-Stange 19.

Bei Auftreten der Zugkraft-Richtungen 38a, 38b liegt die Schrauben-Mutter-Verbindung 36b fest an der Stützfläche 41 der Rippe 41a an, die mit dem Längenabschnitt 19b der Zug-Druck-Stange 19 eine feste Verbindung darstellt. Der Absatz 36c des Schaftbolzens 36 liegt an der Ausdrehung 19c an, die eine Stützfläche 42 bildet.

Bei Auftreten der Druckkraft-Richtungen 40a, 40b liegt die Schraubenmutter-Verbindung 36b des Schaftbolzens 36 mit der Kontermutter 43 gegen die Stützfläche 44, und der Längenabschnitt 19a wird mit seiner Stützfläche 45 gegen den Absatz 36c des Schaftbolzens 36 gepreßt. Die Anlage erfolgt über das Druckfederpaket 35, wobei die Druckplatte 46 und die Stützfläche 45 von dem Schraubenbolzenteil 36d mit Mutter 36e frei durchdrungen werden. Das Anziehen der Mutter 36e spannt die Tellerfedern 34 vor, wobei die Vorspannkraft vorteilhafterweise über die Länge einer Distanzhülse 47 begrenzt werden kann.

Die Lücke 48 zwischen den beiden Längenabschnitten 19a, 19b der Zug-Druck-Stange 19 ist mittels des elastischen Ringbalges 49 gegen Staub und Schmutz abgedeckt.

Die Zug-Druck-Stange 19 kann durchgehend aus einem die Druckspannungen aufnehmenden Rohr hergestellt sein. Wie gezeichnet, besteht die Zug-Druck-Stange 19 aus Rohrteilen und einer Konstruktion aus Profilmaterial 50, das mittels Rippen 51, 52 an die Rohrteile angeschweißt ist.

**Ansprüche**

1. Drehmomentabstützung für auf Wellenzapfen reitende Antriebe, insbesondere für Konverterkippantriebe, auf deren anzutreibendem Wellenzapfen das Getriebegehäuse gelagert ist, wobei jeweils an ein Untersetzungsgetriebe, das in das auf dem Wellenzapfen drehfest angeordnete Großzahnrad mit einem Ritzel eingreift, ein Antriebsmotor angeflanscht ist, bestehend aus symmetrisch zur Drehachse des anzutreibenden Wellenzapfens am Getriebegehäuse mittels Gelenklagern befestigten Lenkerstangen, deren untere Enden jeweils mit parallelverlaufenden, mit auf Flurhöhe ortsfest angeordneten Gelenklagern in Verbindung stehende Hebeln gelenkig verbunden sind, und mit mindestens einer die Parallelhebel unter sich verbindenden Zug-Druck-Stange, dadurch gekennzeichnet, daß die Parallelenker (20, 21) von den ortsfesten Gelenklagern (22, 23) in Normalstellung schräg nach oben verlaufend angeordnet sind, daß die Zug-Druck-Stange (19) in einer Höhenlage zwischen den ortsfesten Gelenklagern (22, 23) und den Getriebegehäuse-Gelenklagern (13, 14) verläuft und daß die Parallellenker (20, 21) aus Laschen bestehen.

2. Drehmomentabstützung nach Anspruch 1, dadurch gekennzeichnet, daß die Getriebegehäuse-Gelenklager (13, 14) und die Zug-Druck-Stange (19) an der Verbindungsstelle mit den Parallellenkern (20, 21) sowie ggf. die ortsfesten Gelenklager (22, 23) jeweils mit sphärischen Gelenklagern (31) versehen sind.

3. Drehmomentabstützung nach den Ansprüchen 1 und 2, dadurch gekennzeichnet, daß die Zug-Druck-Stange (19) in zumindest zwei jeweils mit einer Lücke (48) angeordnete Längenabschnitte (19a, 19b) aufgeteilt ist, zwischen denen jeweils Dämpfungselemente (32) eingebaut sind.

4. Drehmomentabstützung nach den Ansprüchen 1 bis 3, dadurch gekennzeichnet, daß die Dämpfungselemente (32) in einem Hohlraum (33) eines der Längenabschnitte (19a) der Zug-Druck-Stange (19) angeordnet sind.

5. Drehmomentabstützung nach den Ansprüchen 1 bis 4, dadurch gekennzeichnet, daß als Dämpfungselemente (32) zwischen den Längenabschnitten (19a, 19b) der Zug-Druck-Stange (19) eingespannte, ggf. vorgespannte Druckfederpakete (35) vorgesehen sind.

6. Drehmomentabstützung nach Anspruch 5, dadurch gekennzeichnet, daß die voneinander getrennten Längenabschnitte (19a, 19b) der Zug-Druck-Stange (19) mittels eines Schaftbolzens (36) verbunden sind, daß der Schaftbolzen (36) an einem der Längenabschnitte (19b) axial festgelegt ist und am benachbarten Längenabschnitt (19a) sowohl in Zugkraft-Richtung (38) als auch in Druckkraft-Richtung (40) gegen Stützflächen (41, 42, 44, 45) anliegt.

7. Drehmomentabstützung nach den Ansprüchen 5 und 6, dadurch gekennzeichnet, daß zwischen den Stützflächen (44, 45) an einem Längenabschnitt (19a) der Zug-Druck-Stange (19) ein gegen einen Absatz (36c) des Schaftbolzens (36) anliegendes Druckfederpaket (35) angeordnet ist, wobei eine Druckplatte (46) und eine Stützfläche (45) durchdringend ein Schraubenteil (36d) mit Mutter (36e) zum Vorspannen des Druckfederpakets (35) vorgesehen sind.

8. Drehmomentabstützung nach den Ansprüchen 1 bis 7, dadurch gekennzeichnet, daß die Lücke (48) zwischen je zwei Längenabschnitten (19a, 19b) einer Zug-Druck-Stange (19) mittels eines elastischen Ringbalges (49) verschlossen ist.

**Claims**

1. Torque support for shaft-journal-mounted drives, especially for converter tilting drives whose driven shaft journal carries the gear casing, using a drive motor which is invariably flange-mounted to a reducer whose pinion meshes with the bull gear fixed on the shaft journal ; comprising guide links arranged symmetrically relative to the rotation axis of the driven shaft journal and attached to the gear casing by means of spherical plain bearings ; the lower ends of the guide links being connected, articulated fashion, with links carried in parallel spherical plain bearings fixed stationary at floor level and the arrangement having at least one pull-push rod connecting the parallel links, characterized by the parallel links (20, 21) being arranged angularly upward from the stationary spherical plain bearings (22, 23), the pull-push rod (19) being at a specific horizontal level between the stationary spherical plain bearings (22, 23) and the gear casing spherical plain bearings (13, 14) and the parallel links (20, 21) consisting of lugs.

2. Torque support according to claim 1, characterized by the gear casing plain bearings (13, 14) and the pull-push rod (19) connections with the parallel links (20, 21) as well as the stationary plain bearings (22, 23) incorporating spherical plain bearings (31).

3. Torque support according to claims 1 and 2, characterized by the pull-push rod (19) being composed of at least two longitudinal sections (19a, 19b) having a gap (48) between which damping elements (32) are arranged.

4. Torque support according to claims 1 to 3, characterized by the damping elements (32) being located in a cavity (33) of one of the longitudinal sections (19a) of the pull-push rod (19).

5. Torque support according to claims 1 to 4, characterized by restrained or prestretched compression spring packs being used for damping elements (32) between the longitudinal sections (19a, 19b) of the pull-push rod (19).

6. Torque support according to claim 5, characterized by the separated longitudinal sections (19a, 19b) of the pull-push rod (19) being connected by means of a shaft pin (36) and the shaft pin (36) being axially fixed at one of the longitudinal sections (19b) and making contact on the neighbouring longitudinal section (19a) both in the direction of pull (38) and the direction of push (40) with the support faces (41, 42, 44, 45).

7. Torque support according to claims 5 and 6, characterized by a compression spring pack being arranged against a shoulder (36c) of the shaft pin (36) between the supporting faces (44, 45) on one longitudinal section (19a) of the pull-push rod (19) with a threaded portion (36d) passing through a thrust disc (46) and a supporting face (45) using a nut for prestreching the compression spring pack (35).

8. Torque support according to claims 1 to 7, characterized by the gap (48) between invariably two longitudinal sections (19a, 19b) of a pull-push rod (19) being closed by means of elastic anular bellows (49).

**Revendications**

1. Appui de couple de rotation pour entraînements montés chevauchants sur des tourillons d'arbres, en particulier pour commandes de basculement de convertisseurs, dont le tourillon de l'arbre à entraîner pour la boîte de vitesses, avec à chaque fois un moteur d'entraînement bridé à un réducteur attaquant par l'intermédiaire d'un pignon la grande roue dentée montée rigide à la rotation sur le tourillon d'arbre, constitué de bras symétriques à l'axe de rotation du tourillon de l'arbre à entraîner, fixés par des articulations à la boîte de vitesses, reliés à leur extrémité inférieure par une liaison articulée à des leviers disposés en parallèle logés dans des articulations stationnaires au niveau du sol, et au moins à une barre de traction et poussée assurant la liaison sous elle des leviers parallèles, caractérisé par le fait que les bras parallèles (20, 21) sont en position normale orientés en biais vers le haut à partir des articulations stationnaires (22, 23), que la barre de traction et poussée (19) se situe à un niveau entre les articulations stationnaires (22, 23) et les articulations (13, 14) sur boîte de vitesses et que les bras parallèles (20, 21) sont constitués par des éclises.

2. Appui de couple de rotation suivant spécification 1, caractérisé par le fait que les articulations (13, 14) sur boîte de vitesses et la barre de traction et poussée (19) à la jonction avec les bras parallèles (20, 21), ainsi que le cas échéant les articulations stationnaires (22, 23), sont chacune d'elles munies de rotules (31).

3. Appui de couple de rotation suivant spécifications 1 et 2, caractérisé par le fait que la barre de traction et poussée (19) est divisée en au moins deux segments longitudinaux (19a, 19b) séparés par un vide (48), entre lesquels sont installés des éléments amortisseurs (32).

4. Appui de couple de rotation suivant spécifications 1 à 3, caractérisé par le fait que les éléments amortisseurs (32) sont disposés dans un espace creux (33) de l'un des segments longitudinaux (19a) de la barre de traction et poussée (19).

5. Appui de couple de rotation suivant spécifications 1 à 4, caractérisé par le fait que sont prévus comme éléments amortisseurs (32) entre les segments longitudinaux (19a, 19b) de la barre de traction et poussée (19) des paquets de ressorts de pression (35) encastrés, éventuellement précontraints.

6. Appui de couple de rotation suivant spécification 5, caractérisé par le fait que les segments longitudinaux (19a, 19b) de la barre de traction et poussée (19), séparés l'un de l'autre, sont reliés par l'intermédiaire d'un axe à queue (36), que l'axe à queue (36) est fixé axialement à l'un des segments longitudinaux (19b) et porte sur le segment longitudinal voisin (19) contre des surfaces d'appui (41, 42, 44, 45) tant dans le sens effort de traction (38) que dans le sens effort de poussée (40).

7. Appui de couple de rotation suivant spécifications 5 et 6, caractérisé par le fait qu'entre les surfaces d'appui (44, 45) à un segment longitudinal (19a) de la barre de traction et poussée (19) est disposé un paquet de ressorts de pression (35) portant contre un épaulement (36c) de l'axe à queue (36), un élément fileté (36d) avec écrou (36e) traversant une plaque de pression (46) et une surface d'appui (45) étant prévu pour la précontrainte du paquet de ressorts de pression (35).

8. Appui de couple de rotation suivant spécifications 1 à 7, caractérisé par le fait que le vide (48) entre chacun de deux segments longitudinaux (19a, 19b) d'une barre de traction et poussée (19) est fermé au moyen d'un soufflet annulaire élastique (49).

## Fig.1

Fig.3

Fig.2